# EUROPEAN PATENT SPECIFICATION

(11) **EP 0 346 052 B1**
(45) Date of publication and mention of the grant of the patent: **24.08.1994**
(21) Application number: 89305667.1
(22) Date of filing: 05.06.1989
(51) Int. Cl.: G11B 19/02, G11B 15/02, G11B 33/10, G11B 27/36, G04G 5/02, G04G 9/00

(54) **Timer apparatus**
Zeitschalter
Appareil à minuterie

(30) Priority: 06.06.1988 JP 139069/88; 08.06.1988 JP 141368/88
(43) Date of publication of application: 13.12.1989
(73) Proprietor: SONY CORPORATION, Tokyo 141 (JP)
(72) Inventor: Shibuya, Kenichi c/o Patents Division, Shinagawa-ku Tokyo 141 (JP); Okubo, Hirotsugu c/o Patents Division, Shinagawa-ku Tokyo 141 (JP); Furudate, Yukio c/o Patents Division, Shinagawa-ku Tokyo 141 (JP)
(74) Representative: Cotter, Ivan John

(56) References cited:
- GB-A- 2 079 555
- US-A- 4 280 213
- US-A- 4 573 127
- PATENT ABSTRACTS OF JAPAN, vol. 4, no. 44 (E-5), 5 April 1980
- PATENT ABSTRACTS OF JAPAN, vol. 12, no. 363 (P-764), 29 September 1988
- PATENT ABSTRACTS OF JAPAN, vol. 9, no. 49 (E-300), 2 March 1985
- PATENT ABSTRACTS OF JAPAN, vol. 4, no. 112 (E-21), 12 August 1980
- PATENT ABSTRACTS OF JAPAN, vol. 9, no. 61 (E-303), 19 March 1985
- PATENT ABSTRACTS OF JAPAN, vol. 5, no. 126 (P-75)(798), 14 August 1981
- PATENT ABSTRACTS OF JAPAN, vol. 12, no. 298 (P-744), 15 August 1988
- PATENT ABSTRACTS OF JAPAN, vol. 5, no. 42 (P-53), 20 March 1981

## Description

This invention relates to a timer apparatus and, more particularly (but not exclusively), to timer apparatus for programming a video tape recorder, for example by means of a wireless remote control unit.

Some video tape recorders (VTRs) have the capability of programming or reserving the time for recording desired TV programmes using a wireless remote control apparatus or unit that has a transmitter for transmitting programming information to the VTR and that also has a memory backup capability. In such systems, the recording reservation data is retained in a memory of the wireless remote control unit using the memory backup. Thus, in the case of retransmitting recording programming or reservation data have a similar content, the old recording reservation data can be updated and used. For instance, when reserving the recording of two television (TV) programmes such as:
(1) 14 April, 18:00 to 19:00, Channel 2
(2) 17 April, 18:00 to 19:00, Channel 2

the reservation data for the programme corresponding to 14 April (1) is transmitted first. Then, the wireless remote control unit is set into a correcting or updating mode, the date of 14 April is corrected to the date of 17 April by operating keys of the remote control unit, and the data for the programme corresponding to 17 April (2) is transmitted to the VTR.

In many cases, TV programmes are broadcast on a once a week basis, so that some VTRs have a function known as "every week reservation." In the case of reserving the same programme every week, a desired TV programme can be recorded every week by inputting recording reservation data indicating the day of the week, start time, recording time, end time, channel, and the like into a main memory provided in the VTR.

In a VTR of the kind in which the recording programming is entered using the wireless remote control unit described above, although the recording reservation data is kept in the memory by means of the memory backup, when the reservation is again newly executed there is a problem in that the old recording reservation data must be corrected or updated and new recording reservation data must be set again by operating the keys of the remote control unit.

On the other hand, in the VTRs in which the every week reservation capability is provided, although a desired programme can be automatically recorded every week there is the problem that, once the every week reservation has been set, a part of the memory area in the main memory in the VTR is always occupied with the every week reservation data. However, some users do not need, or do not want, to use the every week reservation capability. In such a case, there is a problem that, if the function of the every week reservation is not used, complicated recording operations or recording programming operations must be executed by the user.

Thus, in the case of updating or again reserving the recording reservation data, the operating efficiency of the apparatus is diminished in both cases.

On the other hand, when a new unit (such as a VTR) having a timer function is initially purchased, the current date is ordinarily set, and in the case where the date is digitally displayed by a segmented display device of the kind that is controlled by a microcomputer, the current date is set by sequentially changing the display at a high speed.

The following operations have been known for use in digitally displaying the numerals of a date that is being changed at a high speed:
(1) All the correct numerals are displayed in sequence. However, the display time is reduced to as short a time as possible, and the number of display times is increased.
(2) The numerals are thinned out, that is not all of the numerals are displayed.

In the case where numerals that are periodically changed at a high speed are digitally displayed by method (1) above, there are problems in that, although the correct numerals that follow the actual sequential count values are displayed, the processing time of the microcomputer is devoted solely to processing the display of the numerals, so that other important processes cannot be executed, and also the display time of each individual number is so short that it is difficult for the eye to follow and monitor the changing numbers.

On the other hand, in the case of digitally displaying the numerals using method (2) above, there is a problem that, although the microcomputer can easily execute other important processes because the number of display times is reduced, the quantity of numerals being displayed is so reduced that the display becomes unnatural so that the changing numerals are also difficult for the operator to monitor.

Patent Abstracts of Japan, vol. 4, no. 44, (E005), 5 April 1980 -which is an abstract in English of Japanese Patent Application Publication No. JP-A-55016583 (Tereotetsuku KK) published 5 February 1980 - discloses a programme reservation unit enabling automatic reception of a desired programme by a TV receiver or VTR. Data representing the channel number, date and time of a desired programme are stored in a memory part. The stored data are sequentially outputted and, when a comparator circuit decides that the time data and the present time coincide, a coincidence signal is outputted. When a control part receives the coincidence signal and the data, it outputs a tuning voltage equivalent to the channel number and a power relay driving control signal.

According to a first aspect of the invention there is provided a timer programming apparatus operative to output a predetermined signal for controlling a device, the apparatus comprising:
memory means for storing a reserved date;
present date clock means for producing the present date; and
comparing means for comparing said reserved date with said present date;
the apparatus being characterised by:
user operable activating means; and
means, activated by the user operable activating means, for changing the reserved date stored in the memory means to the nearest future date of the same day of the week as said reserved date when the comparing means determines that the reserved date is older than the present date.

According to a second aspect of the invention there is provided apparatus for controlling the recording or reproducing of an information signal based upon a reserved date, the apparatus comprising:
memory means for storing the reserved date;
present date clock means for producing the present date; and
comparing means for comparing said reserved date with said present date;
the apparatus being characterised by:
user operable activating means; and
timer means, activated by the user operable activating means, for changing the date stored in the memory means to the nearest future date of the same day of the week as the reserved date when a comparison by the comparing means indicates that the reserved date and the present date coincide and when a comparison by the comparing means indicates that the reserved date is older than the present date.

Thus, for example, the reserved or reservation date stored in the memory means (reservation setting memory) is read out, the current date is read out from a preset calendar, and the reservation date and current date are compared. When the reservation date is older than the current date, the current date is changed to the nearest future date of the same day of the week as the reservation day and the updated date is set to be the new reservation date. In this fashion, the old reservation date stored in the memory is automatically updated to the new reservation date. On the other hand, when the reservation date stored in the reservation setting memory and the current date are compared, and the reservation date is the same as or earlier than the current date, the reservation date stored in the reservation setting memory is retained as it is.

According to a preferred feature of the invention, the timer apparatus has a date display section of the segmented kind and/or an annular or ring-like style display section for the day of the week, and by repeating a plurality of display patterns at predetermined periods to display the date and/or the day of the week, the date and/or the day of the week appears as if it were changed at a high speed.

Thus, for example, in a timer apparatus having a segmented type display for the date and an annular display for the day of the week, a plurality of abstract display patterns are selected and sequentially displayed based upon considerations of visual acuity characteristics. Such display patterns are sequentially displayed in a date display section at a high speed and with a predetermined period. To display the day of the week, only a part of the numerals for a day of the week is displayed and a plurality of patterns of these less-than-whole numerals are set based on visual characteristic considerations. Selected patterns of the annular day of the week display are also sequentially displayed in a corresponding display section at a high speed and with a predetermined period. Thus, the date and the day of the week can appear to the observer as if they are continuously and sequentially changed at a high speed, whereas each element of the sequence is not actually displayed.

Preferred embodiments of the invention described in detail below provide: a timer apparatus for use in programming a VTR that can overcome or at least alleviate the above-noted defects inherent in systems known and proposed heretofore; a timer apparatus that can automatically update the recording reservation date in a VTR each time such updating is required; and a timer apparatus in which a microcomputer can not only display the date and the day of the week, but also can execute other data processing operations as required, and in which the date and the day of the week are changed at a fast rate and displayed without appearing unnatural to the user.

The invention will now be further described, by way of illustrative and non-limiting example, with reference to the accompanying drawings, in which like references represent the same or similar elements throughout, and in which:
Figure 1 is a schematic block diagram of a wireless remote control unit and a VTR to which embodiments of the invention can be applied;
Figure 2 is a perspective view of a wireless remote control unit;
Figure 3 is a plan view, partially enlarged, of an upper portion of the unit of Figure 2;
Figure 4 is an enlarged plan view of a liquid crystal display section and reservation setting keys of the unit of Figure 2;
Figures 5 and 6 are flow charts useful in explaining the operation of an embodiment of the invention;
Figures 7A to 7G are pictorial representations of a date display provided in an embodiment of the invention; and
Figures 8A to 8G are pictorial representations of a day of the week display provided in an embodiment of the invention.

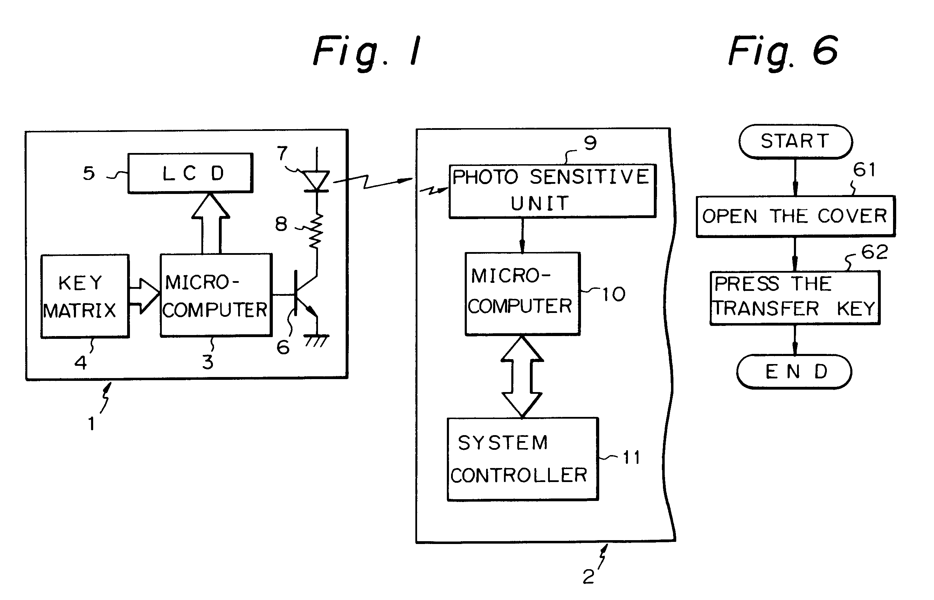

In an embodiment thereof shown in Figures 1 to 6, the invention is applied to a wireless remote control unit or transmitter for controlling a VTR. The embodiment will be described in accordance with the following schedule:
(A) Remote control unit and outline of the operation of a VTR by a remote control unit;
(B) Description of operation using flow charts;
(C) Description of display patterns; and
(D) Description of a date setting operation using the remote control unit.

### (A) Remote control unit and outline of the operation of a VTR by a remote control unit

Figure 1 shows a wireless remote control unit (controller) 1 that transmits information to a VTR 2 by converting recording reservation dates, various kinds of mode signals and the like into infra-red signals and transmitting them to the VTR by the operator manipulating appropriate keys. A calendar is set in the unit 1 by an internal microcomputer 3, used for only the wireless remote control transmitter, or by a table in a memory (not shown) in the unit 1.

The microcomputer 3 operates on the basis of instructions that are outputted from a key matrix 4 upon operation by the user of various kinds of keys that are explained in detail hereinbelow. For example, on the basis of the above instructions, the microcomputer 3 outputs data stored in the memory (not shown) of the microcomputer 3 to a liquid crystal display (LCD) section 5 for displaying the data to the user, or the microcomputer 3 outputs the result of an arithmetic operation executed by the microcomputer 3 to the LCD section 5 for display. Further, when a transmitting mode is set by operating an appropriate key, the microcomputer 3 operates to transmit recording reservation data, a mode signal and the like from the remote control unit 1 to the VTR 2 on the basis of a signal transmission instruction. That is, based on the transmission instruction from the key matrix 4, the microcomputer 3 turns on a driver 6, which can comprise a transistor, to allow a light emitting diode (LED) 7 to convert the recording reservation data, mode signal and the like into infra-red radiation for outputting. A current limiting resistor 8 is connected in series between the transistor 6 and the LED 7.

The infra-red signal outputted by the LED 7 of the remote control unit 1 is detected by a photosensitive unit 9 of the VTR 2 and is converted into an electrical signal and amplified. The electrical signal is then supplied to another microcomputer 10 in the VTR 2. The microcomputer 10 functions as a decoder to convert the electrical signal supplied by the photosensitive section 9 into a signal that can easily be operated on by a system controller 11. In other words, the electrical signal from the photosensitive unit 9 is converted into the recording reservation data, mode signal and the like by the microcomputer 10 and supplied to the system controller 11.

The system controller 11 stores the recording reservation data and controls the VTR 2 so as to record a desired TV programme being transmitted at the date, time, and channel designated by the recording reservation data. After completion of recording of the TV programme, the recording reservation data held in the system controller 11 is erased. A calendar is also set in the VTR 2 in a manner similar to the manner in which the calendar was set in the remote control unit 1.

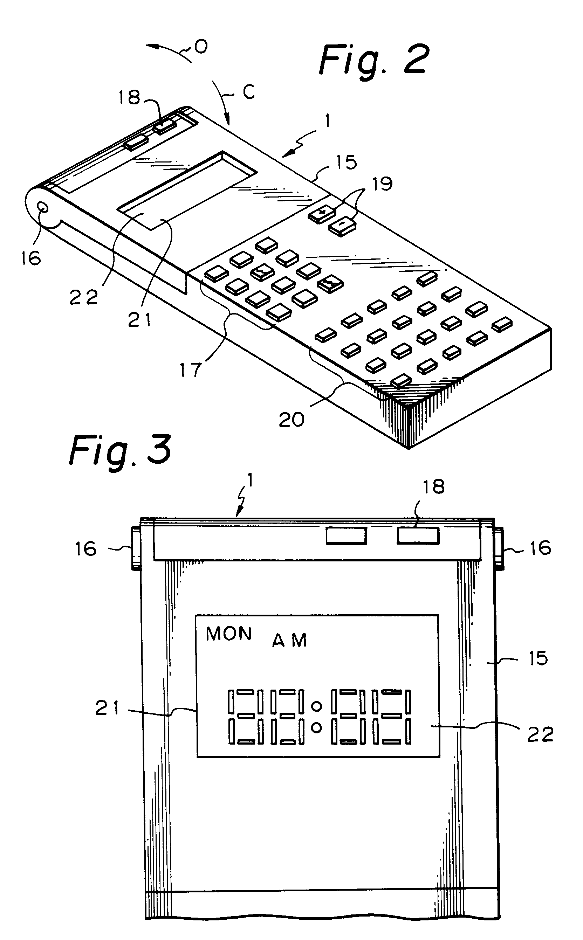

As shown in Figure 2, a cover 15 covers the upper portion of the remote control unit 1 and is rotatable in the directions shown by arrows O and C about a hinge axis 16. The remote control unit 1 also includes number keys 17 corresponding to the numerals 1 to 12, an on/off key 18 to control an internal power supply of the remote control unit 1, channel change keys 19, and various other kinds of control keys 20.

When the cover 15 is closed, as shown in Figure 3, the current day of the week, time, AM/PM, and the like are displayed and can be seen through an opening 21 in the cover 15. This display is provided even if the on/off key 18 is in the off position. Ordinary mode signals other than the recording reservation setting mode signal for the VTR 2 can be transmitted from the remote control unit 1 regardless of whether the cover 15 is open or closed.

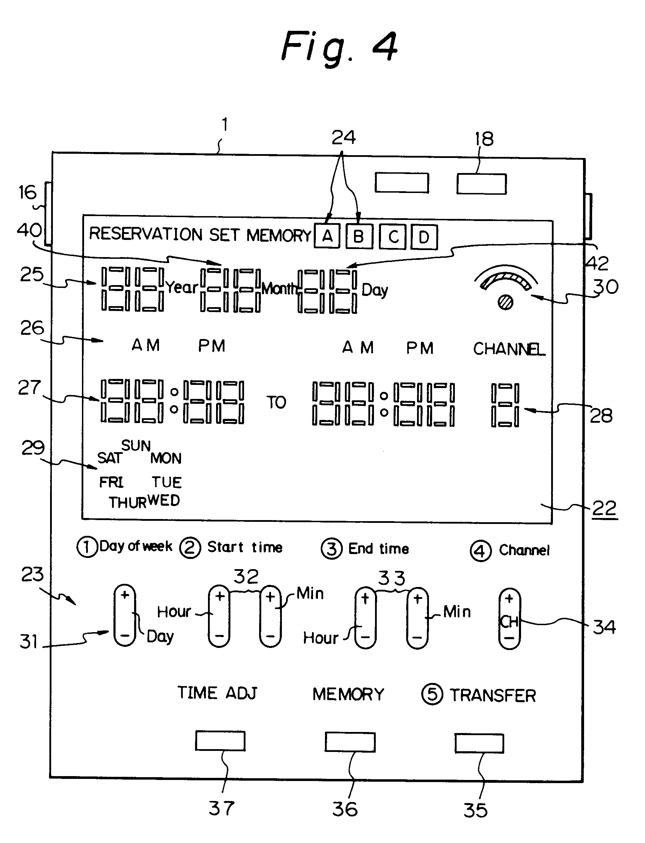

Figure 4 shows the upper portion of the remote control unit 1 when the cover 15 has been opened by rotating it in the direction of the arrow O in Figure 2. As shown in Figure 4, a liquid crystal display (LCD) section 22 and recording reservation setting keys 23 are provided in the portion of remote control unit 1 underneath the cover 15. The LCD section 22 displays the recording reservation data and includes a memory display section 24, a year/month/day display section 25, an AM/PM display section 26, a time display section 27, a channel display section 28, a day of the week display section 29, and a transfer display section 30. The recording reservation setting keys 23 comprise a day/day of the week key 31, start time keys 32, end time keys 33, a channel key 34, a transfer key 35, a memory key 36, and a time adjusting key 37.

When the cover 15 is opened by moving it in the direction of the arrow O in Figure 2, the remote control unit 1 is automatically set to a recording reservation setting mode. The time display section 27 and channel display section 28 are set to a state in which only one display segment, usually the centre segment, is energised in each of the display sections. At this time, the day's date is displayed in the year/month/day display section 25 on the basis of the calendar that has already been set in the remote control unit 1.

When the recording reservation setting mode has been set by opening the cover 15, if the user wants to change the previous recording reservation date held in a memory, for instance in a reservation setting memory A, to the nearest future date from the present day corresponding to the same day of the week, the user first presses the memory key 36. The nearest future date from the present day corresponding to the same day of the week as that of the past recording reservation date will then be set by internal processes that will be explained in detail below. The new recording reservation date and the day of the week are then displayed in the year/month/day display section 25 and the day of the week display section 29, respectively. The same data as the past data is also displayed in the AM/PM display section 26, time display section 27, channel display section 28, and the like, without change. The new recording reservation data is then stored in the reservation setting memory A just as the previous reservation dates.

When the transfer key 35 is depressed, a transfer indication is displayed by the transfer display section 30 and the recording reservation setting mode signal, recording reservation data, and the like are transmitted from the remote control unit 1 to the VTR 2. The infra-red signal from the remote control unit 1 is decoded by the microcomputer 10 in the VTR 2 and supplied to the system controller 11. The system controller 11 stores the recording reservation data and controls the VTR 2. Thus, the TV programme is recorded at the designated day, time, and channel. After completion of the recording of the designated TV programme, the recording reservation data held in the system controller 11 of the VTR 2 is erased.

As described above, according to this embodiment the old or previous recording reservation date can be updated to the new recording reservation date by an extremely simple, uninvolved operation, whereby the cover 15 is opened and the memory key 36 is pressed, so that the complicated operations required in the conventional correcting operation are substantially reduced. In addition, by repeating this operation as desired, the recording can be reserved every week. Furthermore, because the program recording reservation data is erased simultaneously with completion of the recording, the situation in which a part of the memory area in the main memory in the VTR 2 is always occupied, as in the conventional case of using the every week reserving function, is eliminated.

In the case where the user wants to record a TV programme different than the programme ordinarily recorded, new recording reservation data (month, day, start time, end time, channel, day of the week) is set by operating appropriate ones of the day/day of the week key 31, start time keys 32, end time keys 33, and channel key 34. The new recording reservation data may be stored in the reservation setting memory A for example.

Next, when the transfer key 35 is pressed, a transfer indication is displayed in the transfer display section 30 and the recording reservation setting mode signal, recording reservation data and the like are transmitted from the remote control unit 1 to the VTR 2.

In the VTR 2, the infra-red signal from the remote control unit 1 is decoded by the microcomputer 10 and supplied to the system controller 11 which stores the recording reservation data and controls the VTR 2 accordingly. The TV programme at the reserved day, time, and channel is recorded and, after completion of recording of the programme, the recording reservation data in the system controller 11 is erased.

Reservation setting memories A to D are switched by the user pressing the memory key 36; each time the memory key 36 is pressed the reservation setting memories are switched in accordance with the order A to B to C to D back to A. The display of the memory display section 24 is also sequentially switched in correspondence with the switching of the memories. Thus, the recording reservation data recorded in the reservation setting memories A to D can be updated.

When a plus (+) end portion of each of the day/day of the week key 31, start time keys 32, end time keys 33, and channel key 34 is pressed by the user, the numerals in the year/month/day display section 25, time display section 27 and channel display section 28 increase. On the other hand, when a minus (-) end portion is pressed, the numerals in the display sections 25, 27 and 28 decrease.

The time adjusting key 37 is used to display the current time which has been set in the remote control unit 1. When the transfer key 35 is pressed after the time adjusting key 37 has been pressed, the current time set in the remote control unit 1 is displayed on the VTR 2.

### (B) Description of operation using flow charts

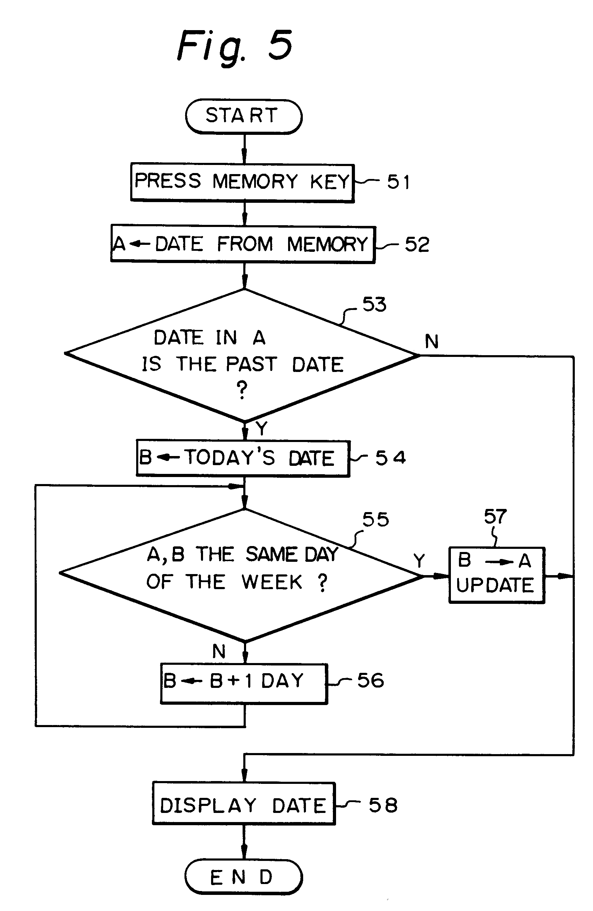

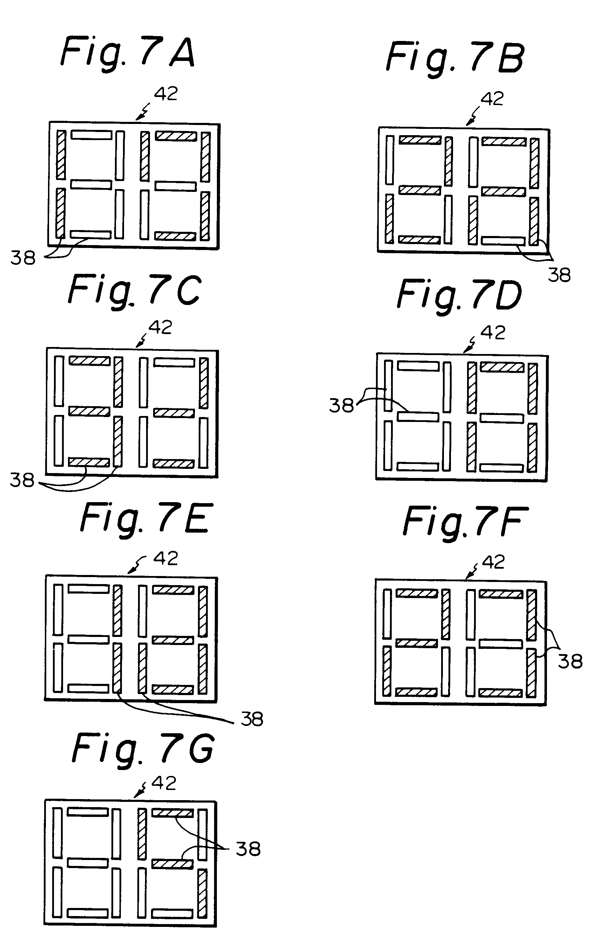

Figure 5 represents a method for the automatic updating of the date, and Figure 6 represents a method of transmitting recording reservation data.

In Figure 5, when the cover 15 of the remote control unit 1 is opened and the memory key 36 is pressed in a step 51, the date (for instance 3 June) is read out of the memory, for example the reservation setting memory A of the microcomputer 3 in the remote control unit 1, and substituted for a variable A, as shown at a step 52. At this time, the day of the week corresponding to the above date is also read out of the calendar that had been previously set in the remote control unit 1.

Next, in a step 53, a check is made to determine whether the date substituted for the variable A is or is not a past date. That is, today's date, for instance 8 June, is read out of the calendar set in the remote control unit 1 and is compared with the date set as the variable A, thereby determining whether the date set as the variable A is or is not a past date. In this case, because the date of the variable A is a past date, the method proceeds to a step 54. However, if the date of variable A is the current date or a future date, the procedure moves to a step 58.

Assuming that the variable A is a past date, today's date and the day of the week (8 June, Wednesday) are read out on the basis of the calendar and substituted for a variable B, in a step 54, after which a step 55 follows. In the step 55, the days of the week of the dates substituted for the variables A and B are compared. In this example, the variable A denotes Friday and the variable B denotes Wednesday. If the days of the week differ, the method proceeds to a step 56. However, if the days of the week are the same, the method proceeds to a step 57.

In the step 56, one day is added to the variable B to set a new value of the variable B, the day of the week is also changed to correspond to the new date, and the process is returned to the step 55. The loop of the steps 55 and 56 is repeated until the day of the week of the date of the variable B is equal to the day of the week of the date of the variable A. In this example, the foregoing steps are repeated until the day of the week of the variable B changes from Wednesday to Friday. When the date and the day of the week of the variable B are finally set to 10 June (Friday), the day of the week of the date of the variable A and the day of the week of the date of the variable B are determined to be equal, and the method moves to the step 57. In the step 57, the date (10 June) of the variable B is stored in the reservation setting memory A and the method moves to the step 58. In the step 58, the date and the day of the week (10 June, Friday), which were newly stored in the reservation setting memory A in the step 57, are displayed by the LCD section 22 together with the other recording reservation data and the method is finished.

Next, the recording reservation data is transmitted to the VTR 2 in accordance with the method represented in the flow chart of Figure 6. The above display can be executed not only by the remote control unit 1, but also by the VTR 2. Figure 6 represents a procedure to transmit recording reservation data from the remote control unit 1 to the VTR 2, in which, in a step 61, the cover 15 of the remote control unit 1 is opened and the transfer key 35 is then pressed (in a step 62). An indication of this data transfer is displayed by the transfer display section 30 of the LCD section 22.

The recording reservation data set by the remote control unit 1 is transmitted to the VTR 2 together with the recording reservation setting mode signal, so that, in the VTR 2, the recording reservation data is inputted to the system controller 11 through the microcomputer 10 and the recording reservation of the desired TV programme is completed.

In this embodiment, a discrimination with respect to whether the recording reservation data stored in the memory is or is not past data has been made on the basis of the date as a reference. However, the invention is not limited to such a method. It is also possible to discriminate more accurately on the basis of both the date and the time as references.

### (C) Description of display patterns

When the VTR 2 is initially purchased, when a battery of the remote control unit 1 is replaced, or when the user wants to previously reserve recording of a future TV programme in the coming few months, the date data in the year/month/day display section 25 must be reset. The updating of the date data is mainly executed by operating the day/day of the week key 31. When the date data is updated by the day/day of the week key 31, the plus (+) end portion of the key 31 is pressed to increase the numerals of the date data and the digits of the numerals must be changed in accordance with the order of the day to month to year. Therefore, it takes a long time to update the date data. To eliminate such a drawback, the present embodiment of the invention displays the date data in the year/month/day display section 25 at a high speed during this updating process. Now, when the display content of the date data is changed at a high speed, the following conditions must be satisfied.
(1) The rate at which the display can be changed is limited by the software of the microcomputer 3. For example, it can only be changed every 45 milliseconds (ms).
(2) Because data displayed at a display time of every 45 ms can be visually followed, if merely numerals are displayed the problem remains due to the difference in display speed and the speed at which signals are outputted from the microcomputer 10. Therefore, numerals cannot be simply displayed as they are.
(3) If the display time of a month display section (shown at 40 in Figure 4) is set to a longer time, for example 180 ms, the user will feel that such a display time is slow, so that a long display time is also not practical.

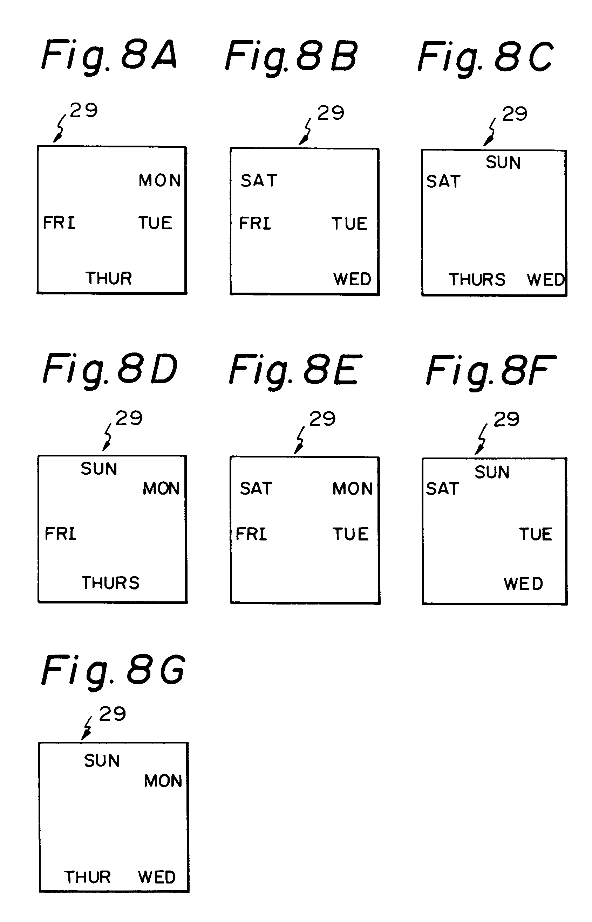

To satisfy the foregoing three limiting conditions, four display timings corresponding to the time intervals when a day display section 42 changes are set every 45 ms for a period of time corresponding to 180 ms when one month is counted. The display patterns as shown in Figures 7A to 7G and Figures 8A to 8G are respectively continuously displayed with such display timing of four times the 45 ms limit. In this way, the display is executed as if the date from the first day (1) to the last day (31) and the days of the week from Monday to Sunday were continuously displayed at a high speed.

Seven different kinds of segment patterns are shown by the hatched portions in Figure 7A to 7G as display patterns for the day display section 42 in the year/month/day display section 25.

The segment patterns are determined in the following manner.
(1) When numerals 0 to 9 are displayed, display segments 38 to be driven are controlled as regards frequency and display time by the microcomputer 10.
(2) In the case where the numerals 0 to 9 are sequentially displayed, for instance, the driving frequency of each display segment 38 and the driving time interval are controlled by the microcomputer 10.

On the basis of the data obtained in the above times (1) and (2), abstract segment patterns similar to numerals, for example as shown in Figures 7A to 7G, are constructed.

By continuously displaying the above segment patterns in accordance with the order A to B to C to ... F to G back to A to ... every 45 ms, it appears to the user observing the numerals as if the least significant digit in the day display section 42 is periodically changing over a range from 0 to 9 and the most significant digit is periodically changing over a range from 0 to 3. Therefore, it appears to the user observing the numerals as if the whole day display section 42 is continuously displaying the days from 1 to 30 (or 31) at a high speed for the period (180 ms) when the month display section 40 is incremented once.

There are seven different kinds of days of the week patterns shown in Figures 8A to 8G for display on the day of the week display section 29 when a fast change is required. These different days of the week patterns are determined in the following manner.
(1) Among the displays of the days of the week comprising Sunday, Monday, Tuesday, ..., Friday and Saturday, arranged annularly, the adjacent days of the week constitute one set and two sets, for example, the pair MON and TUE and the pair THURS and FRI, as shown in Figure 8A, are displayed.
(2) Next, days that were not displayed are provided between the respective sets that were displayed. That is, the days corresponding to WED, SAT, and SUN in the example of Figure 8A are displayed, for example WED and SAT are displayed in Figure 8B.
(3) Further, between the adjacent successive display patterns, some of the days of the week that were displayed are overlapped or duplicated, such as TUE and FRI in the examples of Figures 8A and 8B.

In a manner similar to the foregoing, seven different segment patterns for the days of the week are displayed in accordance with the order A to B to C to ... to F to G back to A to ... Thus, it appears to the user observing the days of the week as if the display content of the day of the week display section 29 is periodically and continuously changing at a high speed in correspondence to the change of the day (date) display section 42.

As described above, because the date and the day of the week are changed by a specialised set of segment display patterns and day of the week patterns shown in Figures 7A to 7G and 8A to 8G, respectively, it is possible to make it appear to the user that the numerals and characters are continuously changing without actually needing all of the character and numerical value changing processes. Thus, the microcomputer can execute not only the processes to display the changing date and day of the week but also can execute other processes.

However, because the user observing the data is given the subjective impression that the date and the day of the week are actually continuously changing at a high speed, no unnatural feeling is caused in the sequential state changes of the display of the date and the day of the week.

Although the number of segment patterns and the number of days of the week patterns in the day display section 42 and day of the week display section 29, respectively, have been set to seven patterns, the invention is not limited to this number. The number of patterns can be increased or decreased or the patterns themselves can be changed.

### (D) Description of a date setting operation using the remote control unit

As described above with reference to Figure 4, when the VTR 2 is initially purchased, when the battery of the remote control unit 1 is replaced, or when the user wants to previously reserve the recording of a future TV programme after a few months, the date data in the display section 25 must be newly reset. To update the date data, the cover 15 of the remote control unit 1 is opened, the time adjusting key 37 is first pressed, and the day/day of the week key 31 is then pressed. By continuously pressing the plus (+) end portion of the key 31, the display of year/month/day display section 25 changes at a high speed. In correspondence thereto, the display speed of the day of the week display section 29 also increases. At this time, the segment patterns of Figures 7A to 7G and the days of the week patterns of Figures 8A to 8G are continuously displayed at a high speed.

When the display data approaches the desired date data, the high speed display operation as mentioned above is stopped, the date and the day of the week are adjusted by operating the day/day of the week key 31, and the desired date data is set. If the user wants to change other data such as the start time, the end time, the channel, or the like in addition to the date data, the data is reset by pressing the corresponding key.

Upon pressing the transfer key 35 after that, an indication of the transfer operation is displayed at the display section 30 and the date data and the other reset data is transmitted to the VTR 2 and stored in both the remote control unit 1 and the VTR 2. On the other hand, if the cover 15 is closed without pressing the transfer key 35, the date data is stored only in the remote control unit 1.

According to a preferred feature of the invention, when the reservation data stored is a date past the present date, the reservation date is automatically changed to the nearest future date which is the same day of the week. Therefore, in a manner different than the conventional methods, the recording reservation data is reset by the wireless remote control unit having a backup function and the advantage arises that the complicated operations typically required to correct the past reservation date by key operations can be simplified and reduced. On the other hand, although the every week reserving function is known, if it is not used a complicated recording operation and recording reservation must be executed each time recording is required. Nevertheless, according to a preferred feature of the invention, the updating of the reservation date and the setting of the new recording reservation data can be extremely easily executed, so that there is an advantage in that the complicated recording reserving operations can be substantially reduced. The operating efficiency can be greatly improved by those advantages. Furthermore, every week recording reservation can be substantially executed and the recording reservation date in the VTR erased simultaneously, with the completion of recording. Therefore, the advantage arises that it is possible to eliminate the situation in which a part of the memory area of the main memory in the VTR is always occupied, as in the conventional case where the every week reservation was used.

According to a preferred feature of the invention, a plurality of display patterns are repetitively displayed at a predetermined period to constitute a display of the date or the day of the week, so that the advantage arises that it is possible to enable the user subjectively to observe the date or the day of the week as if it were being periodically and continuously changed at a high speed. Because the date and the day of the week are changed using special display patterns, it is possible to engineer a situation in which the numerals and characters continuously and sequentially change without requiring the actual character and numerical processes necessary to effect such continuous, sequential change. This provides the advantage that the microcomputer can execute, not only the processes to display the date and the day of the week, but also other processes as well. Because the date and the day of the week are changed by the change of the special display patterns, the advantage arises that the invention can be applied to a system whose processing speed is slow or to an apparatus having no microcomputer. Further, since it is possible to enable the user subjectively to observe the date and the day of the week as if they continuously change at a high speed,the advantage arises that no unnatural feeling is imbued in the user observing the changing state of the display of the date and the day of the week.

## Claims

1. A timer programming apparatus (1) operative to output a predetermined signal for controlling a device (2), the apparatus comprising:
memory means (A,B,C,D) for storing a reserved date;
present date clock means for producing the present date; and
comparing means for comparing said reserved date with said present date;
the apparatus being characterised by:
user operable activating means (36); and
means (3), activated by the user operable activating means, for changing the reserved date stored in the memory means to the nearest future date of the same day of the week as said reserved date when the comparing means determines that the reserved date is older than the present date.

2. Apparatus according to claim 1, wherein the memory means and the present date clock means are operative to provide said reserved date and said present date, respectively, as day and time information.

3. Apparatus according to claim 1 or claim 2, wherein the memory means includes means for storing said reserved date as start information and end information.

4. Apparatus according to claim 1, claim 2 or claim 3, comprising a date display section (25) including segmented display elements, in which each segment (38) thereof is controllably energisable, for displaying date data, and wherein said means for changing is operative to set the date display section to a desired date and to control the energisation of the segments (38) to form a plurality of pattern displays (Figures 7A to 7G) that are sequentially displayed until the date display section is set to said desired date.

5. Apparatus according to claim 4, comprising a day of the week display section (29), in which each day display thereof is controllably energisable, for displaying day of the week data, and wherein the memory means stores a calendar having the days of the week corresponding to the dates of the calendar and the means for changing is operative to control the energisation of each day display to form a plurality of pattern displays (Figures 8A to 8G) that are sequentially displayed until the date display section is set to said desired date.

6. Apparatus (1) for controlling the recording or reproducing of an information signal based upon a reserved date, the apparatus comprising:
memory means (A,B,C,D) for storing the reserved date;
present date clock means for producing the present date; and
comparing means for comparing said reserved date with said present date;
the apparatus being characterised by:
user operable activating means (36); and
timer means (3), activated by the user operable activating means, for changing the date stored in the memory means to the nearest future date of the same day of the week as the reserved date when a comparison by the comparing means indicates that the reserved date and the present date coincide and when a comparison by the comparing means indicates that the reserved date is older than the present date.

7. Apparatus according to claim 6, wherein the memory means and the present date clock means are operative to provide said reserved date and said present date as day and time information.

8. Apparatus according to claim 6 or claim 7, wherein the memory means includes means for storing said reserved date as start information and end information.

9. Apparatus according to claim 8, wherein the means for storing said start information and said end information includes means for dividing said information into day, hour and minute information.

10. Apparatus according to any one of claims 6 to 9, comprising a date display section (25) included segmented display elements, in which each segment (38) thereof is controllably energisable, for displaying date data, and wherein said means for changing is operative to set the date display section to a desired date to control the energisation of the segments (38) to form a plurality of pattern displays (Figures 7A to 7G) that are sequentially displayed until the date display section is set to said desired date.

11. Apparatus according to claim 10, comprising a day of the week display section (29), in which each day display thereof is controllably energisable, for displaying day of the week data, and wherein the memory means stores a calendar having the days of the week corresponding to the dates of the calendar and the means for changing is operative to control the energisation of each day display to form a plurality of pattern displays (Figures 8A to 8C) that are sequentially displayed until the date display section is set to said desired date.

## Patentansprüche

1. Zeitgeberprogrammiervorrichtung (1) zur Erzeugung eines vorbestimmten Signals zur Steuerung einer Einrichtung (2),
mit:
einer Speichereinrichtung (A, B, C, D) zum Speichern eines vorbehaltenen Datums,
einer Laufenddatumsuhr zur Erzeugung des laufenden Datums, und
einer Vergleichseinrichtung zum Vergleichen des vorbehaltenen Datums mit dem laufenden Datum,
**gekennzeichnet durch**
eine durch einen Benutzer betätigbare Aktivierungseinrichtung (36), und
eine durch die Aktivierungseinrichtung aktivierbare Einrichtung (3) zur Änderung des in der Speichereinrichtung gespeicherten vorbehaltenen Datums auf das in nächster Zukunft liegende Datum des gleichen Wochentages als das vorbehaltene Datum, wenn die Vergleichseinrichtung feststellt, daß das vorbehaltene Datum älter das laufende Datum ist.

2. Vorrichtung nach Anspruch 1, wobei die Speichereinrichtung und die Laufenddatumsuhr das vorbehaltene Datum und das laufende Datum als Tag- und Zeitinformation bereitstellen.

3. Vorrichtung nach Anspruch 1 oder 2, wobei die Speichereinrichtung eine Einrichtung zum Speichern des vorbehaltenen Datums als Startinformation und/oder Endinformation aufweist.

4. Vorrichtung nach Anspruch 1, 2 oder 3, mit einem segmentierte Anzeigeelemente aufweisenden Datumsanzeigeabschnitt (25), in welchem jedes Segment (38) zur Anzeige von Datumsdaten steuerbar erregbar ist, und wobei mit der Einrichtung zur Änderung der Datumsanzeigeabschnitt auf ein gewünschtes Datum einstellbar und die Erregung der Segmente (38) zur Bildung mehrerer Musteranzeigen (Figuren 7A bis 7G), die sequentiell angezeigt werden, bis der Datumsanzeigeabschnitt auf das gewünschte Datum eingestellt ist, steuerbar ist.

5. Vorrichtung nach Anspruch 4, mit einem Anzeigeabschnitt (29) für den Tag der Woche, in welchem zur Anzeige von Daten eines Tages der Woche jede Anzeige eines Tages steuerbar erregbar ist, wobei die Speichereinrichtung einen Kalender speichert, der die mit den Daten des Kalenders korrespondierenden Tage der Woche aufweist, und wobei mit der Einrichtung zur Änderung die Erregung jeder Anzeige eines Tages zur Bildung mehrerer Musteranzeigen (Figuren 8A bis 8G), die sequentiell angezeigt werden, bis der Datumsanzeigeabschnitt auf das gewünschte Datum eingestellt ist, steuerbar ist.

6. Vorrichtung (1) zur Steuerung der Aufzeichnung und/oder Wiedergabe eines auf einem vorbehaltenen Datum basierenden Informationssignals,
mit:
einer Speichereinrichtung (A, B, C, D) zum Speichern eines vorbehaltenen Datums,
einer Laufenddatumsuhr zur Erzeugung des laufenden Datums, und
einer Vergleichseinrichtung zum Vergleichen des vorbehaltenen Datums mit dem laufenden Datum,
**gekennzeichnet durch**
eine durch einen Benutzer betätigbare Aktivierungseinrichtung (36), und
eine durch die Aktivierungseinrichtung aktivierbare Zeitgebereinrichtung zur Änderung des in der Speichereinrichtung gespeicherten Datums auf das in nächster Zukunft liegende Datum des gleichen Tages der Woche als das vorbehaltene Datum, wenn ein Vergleich durch die Vergleichseinrichtung anzeigt, daß das vorbehaltene Datum und das laufende Datum zusammenfallen und wenn ein Vergleich durch die Vergleichseinrichtung anzeigt, daß das vorbehaltene Datum älter das laufende Datum ist.

7. Vorrichtung nach Anspruch 6, wobei die Speichereinrichtung und die Laufenddatumsuhr das vorbehaltende Datum und das laufende Datum als Tag- und Zeitinformation bereitstellen.

8. Vorrichtung nach Anspruch 6 oder 7, wobei die Speichereinrichtung eine Einrichtung zum Speichern des vorbehaltenen Datums als Start- und/oder Endinformation aufweist.

9. Vorrichtung nach Anspruch 8, wobei die Einrichtung zum Speichern der Startinformation und/oder Endinformation eine Einrichtung zur Unterteilung der Information in eine Tages-, Stunden- und Minuteninformation aufweist.

10. Vorrichtung nach einem der Anspüche 6 bis 9,
mit einem segmentierte Anzeigeelemente aufweisenden Anzeigeabschnitt (25), bei welchem jedes Segment (38) zur Anzeige von Datumsdaten steuerbar erregbar ist, und wobei mit der Einrichtung zur Änderung der Datumsanzeigeabschnitt auf ein gewünschtes Datum einstellbar und die Erregung der Segmente (38) zur Bildung mehrerer Musteranzeigen (Figuren 7A bis 7G), die sequentiell angezeigt werden, bis der Datumsanzeigeabschnitt auf das gewünschte Datum eingestellt ist, steuerbar ist.

11. Vorrichtung nach Anspruch 10, mit einem Anzeigeabschnitt (29) für einen Tag der Woche, bei welchem zur Anzeige von Daten eines Tages der Woche jede Anzeige eines Tages steuerbar erregbar ist, wobei die Speichereinrichtung einen Kalender speichert, der die mit den Daten des Kalenders korrespondierenden Tage der Woche aufweist, und wobei mit der Einrichtung zur Änderung die Erregung jeder Anzeige eines Tages zur Bildung mehrerer Musteranzeigen (Figuren 8A bis 8C), die sequentiell angezeigt werden, bis der Datumsanzeigeabschnitt auf das gewünschte Datum eingestellt ist, steuerbar ist.

## Revendications

1. Appareil de programmation à minuterie (1) fonctionnant pour fournir un signal prédéterminé pour commander un dispositif (2), l'appareil comprenant:
- des moyens formant mémoire (A, B, C, D) pour mémoriser une date réservée;
- des moyens formant horloge de date courante pour produire la date courante; et
- des moyens de comparaison pour comparer ladite date réservée à ladite date courante,
l'appareil étant caractérisé par:
- des moyens d'activation actionnables par l'utilisateur (36); et
- des moyens (3) activés par les moyens d'activation actionnables par l'utilisateur pour changer la date réservée mémorisée dans les moyesn formant mémoire en la mettant à la date future la plus proche du même jour de la semaine que ladite date réservée lorsque les moyens de comparaison déterminent que la date réservée est plus ancienne que la date courante.

2. Appareil selon la revendication 1, dans lequel les moyens formant mémoire et les moyens formant horloge de date courante fonctionnent pour fournir ladite date réservée et ladite date courante, respectivement, comme informations de jour et d'heure.

3. Appareil selon la revendication 1 ou 2, dans lequel les moyens formant mémoire comprennent des moyens pour mémoriser ladite date réservée comme informations de début et informations de fin.

4. Appareil selon la revendication 1, 2 ou 3, comprenant une partie d'affichage de la date (25) comportant des éléments d'affichage segmentés, dans lequel chaque segment de ceux-ci (38) peut être excité de manière commandée pour afficher les données de la date, et dans lequel lesdits moyens pour changer fonctionnent pour mettre la partie d'affichage de la date à une date désirée et pour commander l'excitation des segments (38) pour former une pluralité d'affichages de motifs (figures 7A à 7B) qui sont affichés séquentiellement jusqu'à ce que la partie d'affichage de la date soit mise à la date désirée.

5. Appareil selon la revendication 4, comprenant une partie d'affichage du jour de la semaine (29) dans laquelle chaque élément d'affichage du jour de la semaine peut être excité de manière commandable pour afficher les données du jour de la semaine, et dans lequel les moyens formant mémoire mémorisent un calendrier ayant les jours de la semaine correspondant aux dates du calendrier et les moyens pour changer fonctionnent pour commanderl'excitation de chaque élément d'affichage du jour de la semaine pour former une pluralité d'affichages de motifs (figures 8A à 8G) qui sont affichés séquentiellement jusqu'à ce que la partie d'affichage de la date soit mise à la date désirée.

6. Appareil (1) pour commander l'enregistrement ou la reproduction d'un signal d'informations basé sur une date réservée, l'appareil comprenant:
- des moyens formant mémoire (A, B, C, D) pour mémoriser la date réservée;
- des moyens formant horloge de date courante pour produire la date courante; et
- des moyens de comparaison pour comparer ladite date réservée à ladite date courante,
l'appareil étant caractérisé par:
- des moyens d'activation actionnables par l'utilisateur (36); et
- des moyens formant minuterie (3) actionnés par les moyens d'activation actionnables par l'utilisateur pour changer la date mémorisée dans les moyens formant mémoire pour la mettre à la date future la plus proche du même jour de la semaine que la date réservée lorsqu'une comparaison effectuée par les moyens de comparaison indique que la date réservée et la date courante coïncident et lorsqu'une comparaison effectuée par les moyens de comparaison indique que la date réservée est plus ancienne que la date courante.

7. Appareil selon la revendication 6, dans lequel les moyens formant mémoire et les moyens formant horloge de date courante fonctionnent pour fournir ladite date réservée et ladite date courante comme informations de jour et d'heure.

8. Appareil selon la revendication 6 ou 7, dans lequel les moyens formant mémoire comprennent des moyens pour mémoriser ladite date réservée comme informations de début et informations de fin.

9. Appareil selon la revendication 8, dans lequel les moyens pour mémoriser lesdites informations de début et lesdites informations de fin comprennent des moyens pour diviser lesdites informations en informations de jour, d'heure et de minute.

10. Appareil selon l'une quelconque des revendications 6 à 9, comprenant une partie d'affichage de la date (25) comportant des éléments d'affichage segmentés, dans lequel chaque segment (38) de ceux-ci peut être excité de manière commandée pour afficher les données de la date, et dans lequel lesdits moyens pour changer fonctionnent pour mettre la partie d'affichage de la date à une date désirée pour commander l'excitation des segments (38) pour former une pluralité d'affichages de motifs (figures 7A à 7G) qui sont affichés séquentiellement jusqu'à ce que la partie d'affichage de la date soit mise à ladite date désirée.

11. Appareil selon la revendication 10, comprenant une partie d'affichage du jour de la semaine (29), dans lequel chaque élément d'affichage du jour de la semaine de celle-ci peut être excité de manière commandable pour afficher les données du jour de la semaine, et dans lequel les moyens formant mémoire mémorisent un calendrier ayant les jours de la semaine correspondant aux dates du calendrier, et les moyens pour changer fonctionnent pour commander l'excitation de chaque élément d'affichage du jour de la semaine pour former une pluralité d'affichages de motifs (figures 8A à 8G) qui sont affichés séquentiellement jusqu'à ce que la partie d'affichage de la date soit mise à ladite date désirée.
